# EUROPEAN PATENT APPLICATION

(11) **EP 2 068 476 A1**
(43) Date of publication of application: **10.06.2009**
(21) Application number: 07828820.6
(22) Date of filing: 28.09.2007
(51) Int. Cl.: H04J 11/00, H04J 1/00, H04Q 7/36

(54) **BASE STATION DEVICE AND METHOD**

(30) Priority: 03.10.2006 JP 2006272348
(71) Applicant: NTT DoCoMo, Inc., Chiyoda-ku Tokyo 100-6150 (JP)
(72) Inventor: OFUJI, Yoshiaki, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/069079
(87) International publication number: WO 2008/041650

(57) **Abstract**

A base station apparatus is disclosed that includes a unit generating a low-layer control channel including at least resource allocation information and transmission system information of a data channel to be transmitted to a user equipment, a unit separately performing channel coding on each low-layer control channel of the plural sets of the user equipment, a unit transmitting the data channel and the low-layer control channel to the user equipment, and a determination unit configured to determine a multiplexing system of a downlink radio resource based on at least one of mobility of the user equipment and a traffic type. In the base station apparatus, high-layer control information indicating that the multiplexing system of the downlink radio resource is either a localized FDM system or a distributed FDM system is transmitted via the data channel.

## Description

### TECHNICAL FIELD

The present invention relates to a technical field of mobile communications, and more particularly to a technical field of a base station apparatus and user equipment used in a mobile communication system, and a method used in the base station apparatus and the user equipment.

### BACKGROUND ART

In this technical field, research and development of a next-generation mobile communication system have been carried out at a rapid rate. Especially in downlink communications, due to strong demands for increasing data rate and capacity and demands for, for example, effective use of greater frequency bandwidth than before, proposals based on the multi-carrier system, especially the Orthogonal Frequency Division Multiplexing (OFDM) system, have been made. Further, as Frequency Division Multiplexing (FDM) systems to ensure orthogonality between users, two systems which are a localized FDM system (method) and a distributed FDM system (method) have been proposed. In the localized FDM system, consecutive bandwidths are preferentially allocated to a user equipment having locally good channel status (quality) along the frequency axis. This localized FDM system may be advantageously used for, for example, communications of user equipment with low mobility (moving slowly) and high-quality and large-capacity data transmission. In the distributed FDM system, a downlink signal is generated in a manner so that the signal has plural discrete frequency components across a wide frequency bandwidth. This distributed FDM system may be advantageously used for, for example, communications of user equipment with high mobility (moving fast) and periodic data transmission of smaller sized data packets like VoIP. Whichever system is employed, the frequency resources are allocated based on the information indicating the consecutive bandwidth or the plural discrete frequency components.

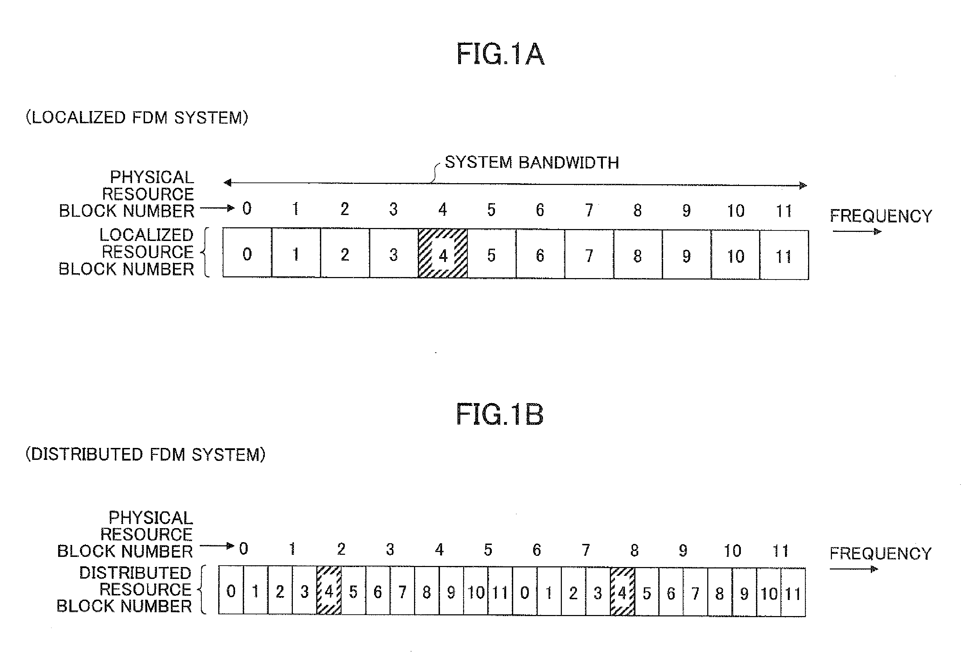

FIG. 1A shows an example when the localized FDM system is used. As shown in FIG.1A, in the localized FDM system, when the resource is specified by a number "4", the resource having a physical resource block number of "4" is used (allocated). On the other hand, FIG. 1B shows an example when the distributed FDM system is used. As shown in FIG. 1B, in the distributed FDM system, when the resource is specified by the number "4", each left half part of the physical resource blocks 2 and 8 is used (allocated). In the example of FIG. 1B, each physical resource block is divided into two (2) parts. This kind of a proposed downlink system is described in, for example, in Non Patent Document 1.
Non Patent Document 1: 3GPP, R1-062089, NTT DoCoMo, et al., "Comparison between PB-level and Sub-carrier-level Distributed Transmission for Shared Data Channel in E-UTRA Downlink"

### DISCLOSURE OF INVENTION

### PROBLEMS TO BE SOLVED BY THE INVENTION

A downlink control channel (DCCH) (i.e., L1/L2 control channel) associated with a downlink data channel (DDCH) provides information whether resources are allocated to user equipment that receives and demodulates the downlink control channel (DCCH). In the L1/L2 control channel of the proposed system, the entire resource allocation information of all user equipment is regarded as a unit to be channel-coded. By increasing the size of the unit to be channel-coded, the coding gain may be accordingly improved. However, when the L1/L2 control channels for all user equipment are to be commonly channel-coded, the power for transmitting the L1/L2 control channel may be determined based on the user equipment having the worst channel conditions. This means that excessively high quality (power) may be provided to the user equipment other than the user equipment having the worst channel conditions. Also, this method may not be advantageous from the viewpoints of improving the reduction of interference signals, effective use of base station resources and the like. As a solution of the above mentioned problem, a method may be employed so that each L1/L2 control channel of the user equipment is independently channel-coded with respect to the corresponding user equipment under the control of a base station, thereby controlling the transmission power of each user equipment independently. By doing this, it may become possible to overcome the above problem.

On the other hand, communication environments of the user equipment may dynamically vary over periods of time. Therefore, an appropriate transmission system (Frequency Multiplexing system) of specific user equipment may also vary over periods of time in accordance with the communication environment change. More specifically, the number is not always constant of users (user equipment) who may perform the downlink communication more advantageously when the localized FDM system is used. In other words, it is preferable if the number of the users (user equipment) can be configured to be changed in accordance with the communication environment change. However, in the proposed communication method, both the number of users who are to perform communications using the localized FDM system and the number of users who are to perform communications using the distributed FDM system are determined and fixed in advance; therefore it is difficult that the number of the users using the localized/distributed FDM systems can be changed in accordance with the communication environment change. If it is intended that the number of the users who are to communicate using the distributed FDM system is to be changed by using the above method of controlling the transmission power of each user equipment independently, it becomes necessary to integrate the information indicating the number of users to be using the distributed FDM system into each L1/L2 control channel to be channel-coded of the corresponding user equipment. This is because each user equipment needs to know the frequency that can be used by the user equipment (self station) (namely, the user equipment demodulates the L1/L2 control channel and determines whether the frequency is allocated based on whether there is included an identification number for the user equipment (self equipment). After recognizing the identification number of the self equipment, the user equipment can recognize where the resource block number for the self equipment is described based on the number of users (user multiplexing number). However, as described above, when the information indicating the number of users to be using the distributed FDM system is integrated into each L1/L2 control channel to be channel-coded of the corresponding user equipment, the overhead in the downlink communications is accordingly increased, which is not advantageous from the viewpoint of effective use of resources.

An object of the present invention is to make it possible to change (adjust) the number of users who are to perform communications using the distributed FDM system while controlling the amount of information of the channel-coded L1/L2 control channel with respect to each user.

### MEANS FOR SOLVING THE PROBLEMS

According to an aspect of the present invention, a base station apparatus includes a unit generating a low-layer control channel including at least resource allocation information and transmission system information of a data channel to be transmitted to user equipment, a unit separately performing channel coding on each low-layer control channel of the plurality of user equipment, a unit transmitting the data channel and the low-layer control channel to the user equipment, and a unit determining a multiplexing system of a downlink radio resource based on at least one of a mobility of user equipment and a traffic type. Further, in the base station apparatus, high-layer control information indicating that the multiplexing system of the downlink radio resource is either a localized FDM system or a distributed FDM system is transmitted via the data channel.

### ADVANTAGEOUS EFFECT OF THE INVENTION

According to an embodiment of the present invention, it may become possible to change (adjust) the number of users who are to perform communication using the distributed FDM system while controlling the amount of information of the channel-coded L1/L2 control channel with respect to each user.

### BRIEF DESCRIPTION OF THE DRAWINGS

FIG. 1A is a drawing illustrating a localized FDM system;
FIG. 1B is a drawing illustrating a distributed FDM system;
FIG. 2 is a block diagram showing a base station apparatus according to an embodiment of the present invention;
FIG. 3 is a block diagram showing user equipment according to an embodiment of the present invention;
FIG. 4 is a flowchart showing an example of a method according to an embodiment of the present invention;
FIGS. 5A and 5B show examples of setting resource block numbers;
FIG. 6 is a flowchart showing a process of a determining a type of the FDM system, the process being applicable to step S20 in FIG. 4;
FIG. 7 is a drawing showing an example of determining the resource block number using tree-branch numbers;
FIG. 8 is a drawing showing corresponding relationships between PRB numbers and DRB numbers, the corresponding relationships being different from each other between cells;
FIG. 9 is a drawing showing dividing (allocating) methods (patterns) of PRB, the patterns being different from each other between cells; and
FIG. 10 is a drawing illustrating where resource blocks to be used in the Persistent Scheduling are changed in accordance with a predetermined pattern.

### EXPLANATION OF REFERENCES

- PRB: PHYSICAL RESOURCE BLOCK
- LRB: RESOURCE BLOCK IN LOCALIZED FDM SYSTEM
- DRB: RESOURCE BLOCK IN DISTRIBUTED FDM SYSTEM
- 1-N: BUFFERS
- 202: SCHEDULER
- 204: L1/L2 CONTROL CHANNEL GENERATION SECTION
- 206,210: CHANNEL CODING SECTION
- 208,212: DATA MODULATION SECTION
- 214: BROADCAST CHANNEL GENERATION SECTION
- 216: OTHER TRANSMISSION SIGNAL GENERATION SECION
- 218: MAPPING SECTION
- 220: IFFT (INVERSE FAST FOURIER TRANSFORM) SECTION
- 222: CP ADDITION SECTION
- 224: RF TRANSMISSION CIRCUIT SECTION
- 226: POWER AMPLIFIER
- 228: DUPLEXER
- 230: ANTENNA
- 232: RECEIVED SIGNAL DEMODULATION SECTION
- 234: TRANSMISSION SYSTEM DETERMINATION SECTION
- 236: TRANSMISSION SYSTEM STORAGE SECTION
- 238: L3 CONTROL SIGNAL GENERATION SECTION
- 302: ANTENNA
- 304: DUPLEXER
- 306: RF RECEIVING CIRCUIT
- 308: RECEIVE TIMING ESTIMATION SECTION
- 310: FFT (FAST FOURIER TRANSFORM) SECTION
- 312: DOWNLINK L1/L2 CONTROL CHANNEL DEMODULATION SECTION
- 314: DE-MAPPING SECTION
- 316: CHANNEL ESTIMATION SECTION
- 318: DATA DEMODULATION SECTION
- 320: CHANNEL DECODING SECTION
- 322: MEMORY
- 324: CQI ESTIMATION SECTION
- 326: DOPPLER FREQUENCY ESTIMATION SECTION

### BEST MODE FOR CARRYING OUT THE INVENTION

According to an embodiment of the present invention, a base station apparatus used in a mobile communication system determines a type of multiplexing method of downlink radio resources based on at least one of a mobility of user equipment and a traffic type. High layer control information indicating whether a localized FDM system (method) or a distributed FDM system (method) is used as the multiplexing method of the downlink radio resources is transmitted via a data channel to user equipment. By doing his, it may become possible to change (adjust) the number of users who use the distributed FDM system while controlling the amount of information of an L1/L2 control channel.

In the following, several embodiments of the present invention may be separately described (classified) for explanation purposes only. In other words, the classification of the present invention into the several embodiments is not essentially important. Namely, two or more embodiments described below may be combined to realize yet further embodiments on an as needed basis.

### Embodiment 1

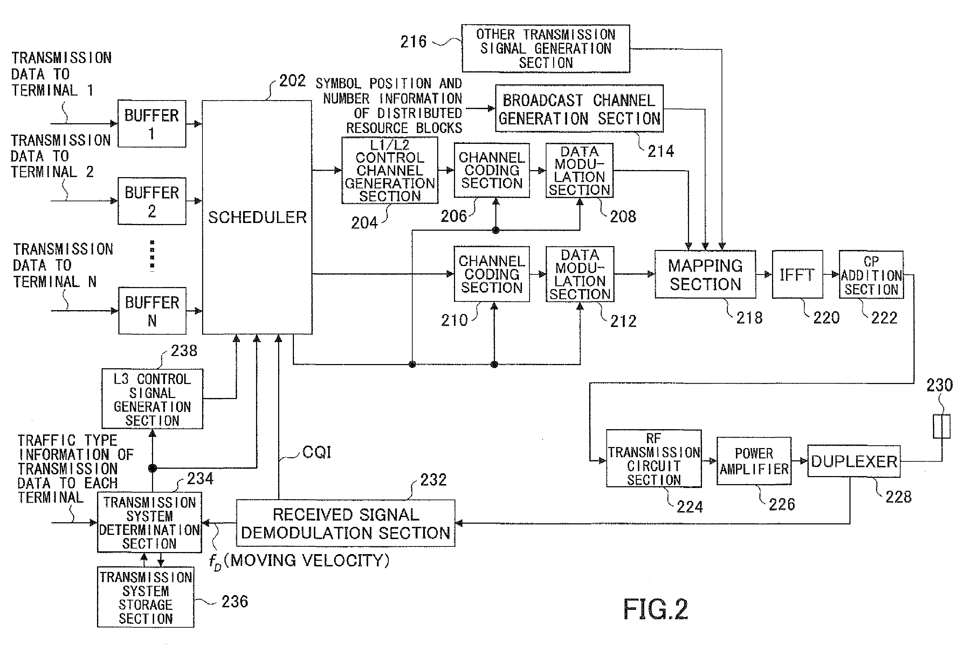

FIG. 2 is a block diagram showing a base station apparatus according to an embodiment of the present invention. As FIG. 2 shows, the base station apparatus includes buffers 1 through N, a scheduler 202, an L1/L2 control channel generation section 204, channel coding sections 206 and 210, data modulation sections 208 and 212, a broadcast channel generation section 214, an other transmission signal generation section 216, a mapping section 218, an IFFT (Inverse Fast Fourier Transform) section 220, a CP addition section 222, an RF transmission circuit section 224, a power amplifier 226, a duplexer 228, an antenna 230, a received signal demodulation section 232, a transmission system determination section 234, a transmission system storage section 236, and an L3 control signal generation section 238.

Each of the buffers 1 through N denotes (serves as) a transmission buffer for storing user data (or may be referred to as "data channel" or "traffic data") to be transmitted to the corresponding user equipment. The user equipment (UE) is generally a mobile terminal. However, the user equipment may be a fixed terminal.

The scheduler 202 performs scheduling of downlink to determine a data channel to be transmitted, a resource to be used in the transmission, user equipment as the destination of the data transmission, and time when the transmission is to be performed. What is determined (determined content) constitutes scheduling information (including resource allocation information and transmission format information). The resource allocation information specifies resources such as a frequency, time, and transmission power. The transmission format information determines a transmission rate of the data channel and specifies a data modulation method and channel coding rate. The channel coding rate may be directly designated or may be uniquely obtained based on the data modulation method and the data size. The scheduling is performed based on the quality information (CQI) indicating a downlink channel status. The downlink channel status is determined by receiving a downlink pilot channel (DPICH) and measuring the receiving quality of the downlink pilot channel (DPICH) by the user equipment. The measured value (CQI) is reported to the base station using an uplink control channel (UCCH).

The L1/L2 control channel generation section 204 generates an L1/L2 control channel (low layer control channel) including the scheduling information. The L1/L2 control channel (L1/L2 control signal) is transmitted along with the downlink data channel (DDCH) and reports necessary data to demodulate the downlink data channel (DDCH) to the user equipment.

Each of the channel coding sections 206 and 210 performs channel coding on data based on the designated channel coding rate (such as 1/4, 1/3, and 2/3). As the channel coding rate with respect to the control channel, a fixed value set in advance in the system may be used. On the other hand, as the channel coding rate (such as 1/4, 1/3, 2/3, and 6/7) with respect to the data channel, a value determined by the scheduling each time is used.

Each of the data modulation sections 208 and 212 modulates data based on the designated data modulation method (such as QAM and 16QAM). As the data modulation method (such as QAM and 16QAM) with respect to the control channel, a fixed method set in advance in the system may be used. As the data modulation method (such as QAM and 16QAM) with respect to the data channel, a method determined by the scheduling each time is used.

The broadcast channel generation section 214 generates a broadcast channel (BCH). As described below, the broadcast channel according to an embodiment of the present invention includes the information indicating corresponding relationships between plural physical resource blocks and plural discrete frequency components used in the distributed FDM system. The corresponding relationships are determined with respect to each cell.

The other transmission signal generation section 216 generates physical channels other than the data channel (DCH), the L1/L2 control channel, and the broadcast channel (BCH). The physical channels as such may include a common pilot channel (CPICH), a dedicated pilot channel (DPCH), a synchronization channel (SCH) and the like.

The mapping section 218 performs mapping so that the each (physical) channel can be appropriately frequency-multiplexed. The mapping is performed in accordance with the system (localized FDM system or distributed FDM system) currently used.

The IFFT section 220 performs an IFFT on the signal input to the IFFT section 220 and further performs OFDM modulation.

The CP addition section 222 adds a guard interval to the IFFTed signal based on a CP (Cyclic Prefix) method to generate transmission symbols.

The RF transmission circuit section 224 performs various processes such as digital-to-analog conversion, frequency conversion, and bandwidth limitation so as to transmit the transmission symbols on a radio frequency.

The power amplifier 226 adjusts transmission power.

The duplexer 228 switches between the transmission signal and the received signal to achieve full-duplex communications.

The received signal demodulation section 232 receives an uplink signal and demodulates the received uplink signal. The uplink signal may include an uplink data channel (UDCH), an uplink L1/L2 control channel, a pilot channel and the like. Further, the receive signal demodulation section 232 extracts the quality information (CQI) from an uplink L1/L2 control channel and transmites the extracted quality information to the scheduler 202, the quality information (CQI) being derived (measured) by the user equipment based on the receiving quality of the downlink pilot channel (DDICH). Further, the receive signal demodulation section 232 extracts information about the mobility of the user equipment as well from the uplink L1/L2 control channel. The information about the mobility is generally expressed as the moving velocity obtained from the Doppler frequency f_{D}. The higher the Doppler frequency becomes, the more rapidly the distance between the user terminal and the base station changes per unit time.

The transmission system determination section 234 determines whether the downlink communication with the user equipment is to be performed by the localized FDM system or the distributed FDM system based on at least one of the mobility (f_{D}) of the user equipment and a traffic type of the user data. An update of the FDM system is not necessarily performed as frequently as the packet scheduling, namely the update of the FDM system may be performed with low frequency. More specifically, for example, when the scheduling is performed every one subframe of 0.5 ms or 1.0 ms, the update of the FDM system may be performed once in every 1,000 ms (herein, the term "update" includes (means) not only changing the FDM system from one to another but also continuing the same FDM system). Basically, it is preferable that the localized FDM system be used when the user equipment moves slowly (at slow mobility) and the distributed FDM system be used when the user equipment moves fast (at fast mobility). Further, it is also preferable that the localized FDM system be used when the traffic type is for relatively high-quality and large amount of data transmission, and the distributed FDM system be used when the traffic type is for relatively smaller sized data such as Voice over IP (VoTP).

The transmission system storage section 236 stores an information item of what is determined (the localized FDM system or the distributed FDM system) by the transmission system determination section 234.

The L3 control signal generation section 238 integrates the information item indicating the transmission system (method) determined by the transmission system determination section 234 into L3 control information (high layer control information), the L3 being an upper layer higher than L1 and L2. The L3 control information is passed through the channel coding section 210 and the data modulation section 212 and transmitted via the data channel. As described above, the update of the FDM system is performed with low frequency. Therefore, it is not always necessary to use the L1/L2 control channel but upper layer signaling used for L3 control information and the like is good enough in order to follow the frequency of the update of the FDM system.

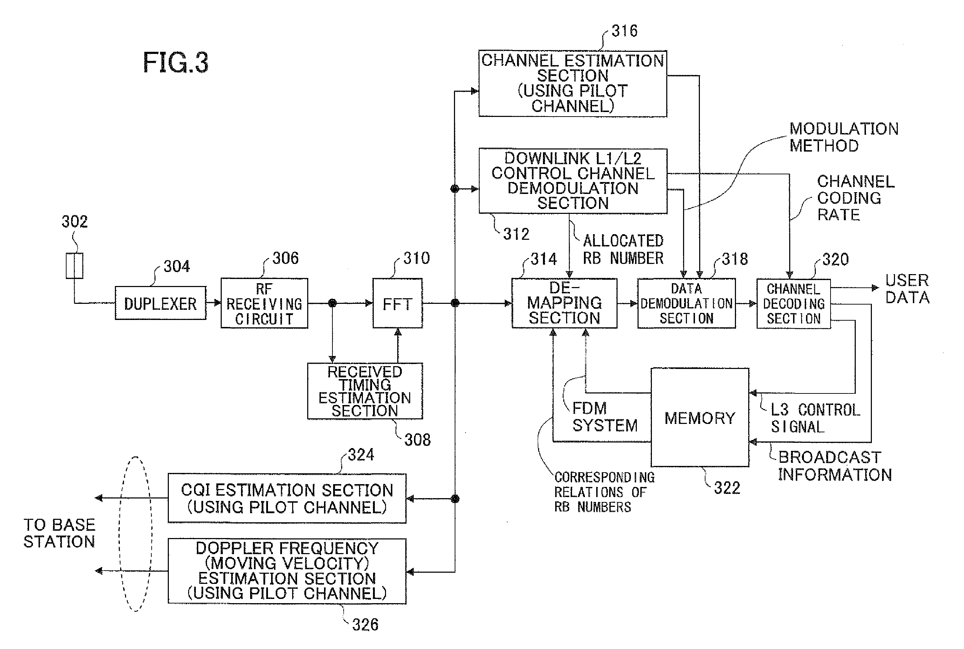

FIG. 3 is a block diagram showing a set of user equipment according to an embodiment of the present invention. As FIG. 3 shows, the user equipment includes an antenna 302, a duplexer 304, and an RF receiving circuit 306, a receive timing estimation section 308, an FFT (Fast Fourier Transform) section 310, a downlink L1/L2 control channel demodulation section 312, a de-mapping section 314, a channel estimation section 316, a data demodulation section 318, a channel decoding section 320, a memory 322, a CQI estimation section 324, and a Doppler frequency estimation section 326.

The duplexer 304 switches between the transmission signal and the received signal to achieve full-duplex communications.

The RF receiving circuit 306 performs various processes such as analog-to-digital conversion, frequency conversion, and bandwidth limitation so as to make it possible to process the received symbols in baseband.

The receive timing estimation section 308 estimates a receive timing and specifies a part of effective symbols (in transmission symbols, but excluding a guard interval part) which are OFDM modulated.

The FFT section 310 performs an FFT on the received signal and OFDM demodulation. The received signal may include a downlink data channel (DDCH), a downlink L1/L2 control channel, the downlink pilot channel (DPICH), the broadcast channel (BCH) and the like.

The downlink L1/L2 control channel demodulation section 312 extracts the downlink L1/L2 control channel from the received signal and demodulates the extracted downlink L1/L2 control channel. As described above, the downlink L1/L2 control channel includes the scheduling information including both the resource allocation information and the transmission format information.

The de-mapping section 314 extracts the downlink data channel transmitted to the self equipment from the received signal based on the resource allocation information, and outputs the extracted downlink data channel. In this case, the de-mapping section 314 extracts the downlink data channel in accordance with the multiplexing system used for the downlink data channel that the user equipment receives. The multiplexing system is designated in the L3 control information. More specifically, the multiplexing system to be used is either the localized FDM system or the distributed FDM system. Further, the corresponding relationships between the resource block numbers used in a serving cell for the user equipment and the physical resource block numbers commonly used in all cells are reported to each user equipment as broadcast information. Therefore, it is necessary for the de-mapping section 314 to perform the de-mapping in accordance with the content of the broadcast information.

The channel estimation section 316 performs channel estimation based on the downlink pilot channel (DPICH) to compensate for the fading distortion in the downlink channel.

The data demodulation section 318 performs data demodulation of the downlink data channel transmitted to the self equipment based on the scheduling information (information specifying the data modulation method in the transmission format information) and the channel estimation result.

The channel decoding section 320 performs channel decoding of the downlink data channel transmitted to the self equipment in accordance with the scheduling information (information specifying the channel coding rate in the transmission format information). The decoded signal is fed to a latter processing section.

The memory 322 stores the broadcast information in the broadcast channel (BCH), the L3 control information in the data channel and the like.

The CQI estimation section 324 derives a CQI (Channel Quality Indicator) which is the information item indicating the quality of the channel based on the received quality of the downlink pilot channel (DPICH) (the quality may also be determined based on the SINR, the SIR and the like). The derived CQI is reported to the base station via the uplink L1/L2 control channel.

The Doppler frequency estimation section 326 measures the maximum Doppler frequency f_{D} based on the receiving status of the downlink pilot channel (DPICH) to derive the measurement value of the maximum Doppler frequency f_{D} and the mobility of the user equipment. The derived measurement vale and the mobility are also reported to the base station via the uplink L1/L2 control channel.

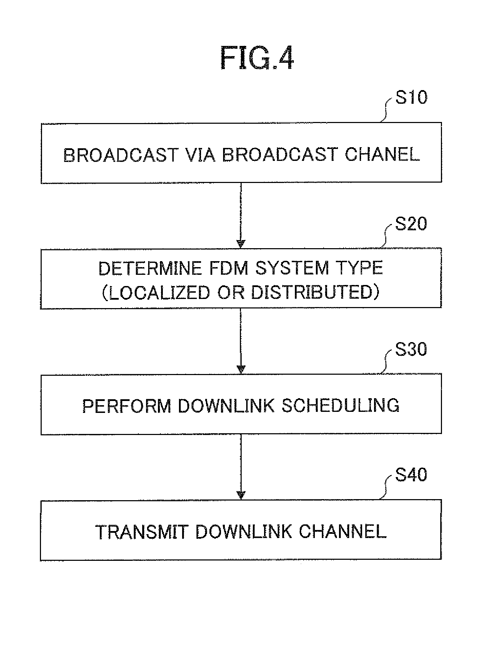

FIG. 4 is a flowchart showing an exemplary method according to an embodiment of the present invention, the method being used in a mobile communication system including plural set of user equipment and a base station.

As shown in FIG. 4, in step S10, the broadcast channel (BCH) is broadcasted (transmitted) to each user equipment in a cell from the base station. The broadcast information transmitted via the broadcast channel includes not only general information items (such as identification number of the cell) broadcasted in a conventional mobile communication system but also RB (Resource Block) information according to an embodiment of the present invention.

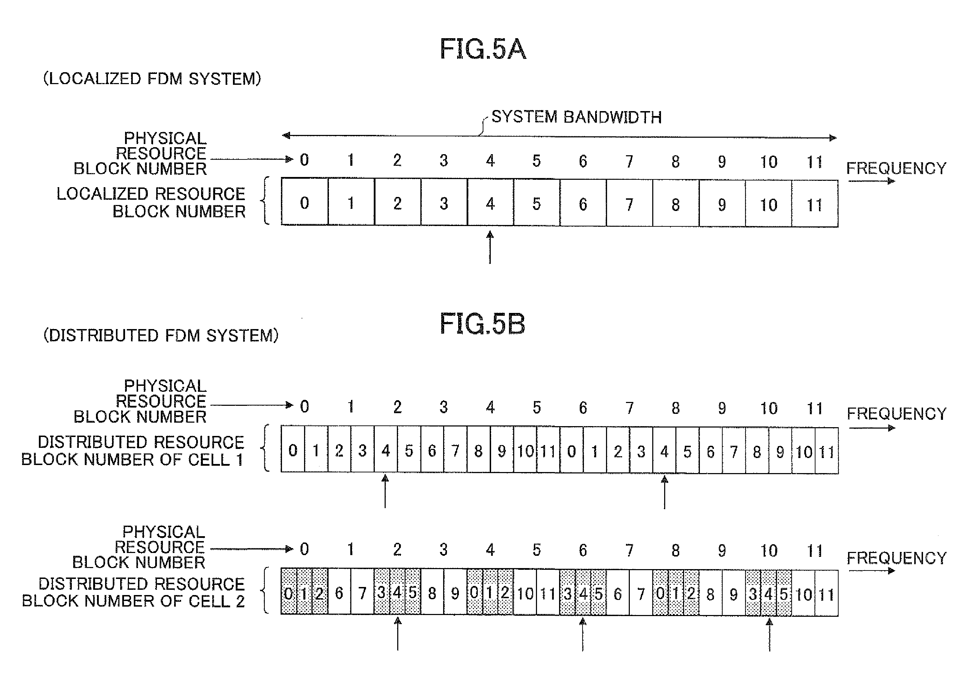

FIGS. 5A and 5B show examples of the resource block information items. As shown in FIGS. 5A and 5B, there are three types of numbers used to express the resource block information. They are a Physical Resource Block (PRB) number, a Localized Resource Block (hereinafter referred to as "LRB") number, and a Distributed Resource Block (hereinafter referred to as "DRB") number. The physical resource block number indicates one of a predetermined number (for example, any one of 1 through 12) included in a system bandwidth (for example, 5 MHz). The LRB number is for specifying the resource block in the localized FDM system. In the embodiments of the present invention, the physical resource block numbers and LRB numbers are provided in the same manner and common in each cell. The DRB number is for specifying the resource block in the distributed FDM system.

According to the embodiment of the present invention, the DRB number is independently provided with respect to each cell. The distributed block numbers are provided so that one resource block is divided into a plural number of the distributed blocks. For example, the as shown in the upper side of FIG. 5B, each of the physical resource blocks is divided into two DRBs, which are numbered from the left end from 0 to 11 twice. Therefore, in this case, there are two resource blocks having the same DRB number (4), which are in the left half of physical resource blocks 2 and 8, respectively. However, it should be noted that it is not always necessary that each of the physical resource blocks be divided into the same number of the distributed resource blocks. For example, as shown in lower side of FIG. 5B, each of the physical resource blocks having even numbers (including "0") is divided into three DRBs, and each of the physical resource blocks having odd numbers (including "0") is divided into two DRBs. Further, the number of each of the plural discrete frequency components may be the same (see the upper side of FIG.5B) or different (see the lower side of FIG. 5B) with respect to each of the DRB numbers. For example, in the example of the lower side of FIG. 5B, the numbering of the DRB numbers is performed so that the DRB numbers (0, 1, 2, 3, 4, and 5) are repeatedly allocated three times across all the physical blocks having even numbers (0, 2, 4, 6, 8, and 10). On the other hand, the DRB numbers (6, 7, 8, 9, 10, and 11) are repeatedly allocated two times across all the physical blocks having odd numbers (1, 3, 5, 7, 9, and 11). Therefore, for example, there are three (3) resource blocks having the DRB number "4" as the center resource block at the PRBs 2, 6, and 10; and there are two (2) resource blocks having the DRB number "8" as the left resource block at the PRBs 3 and 9.

As described above, the LRB numbers may be regarded as "absolute" numbers corresponding to each of the physical resource blocks across all the cells, and the LRB numbers may be regarded as "relative" numbers independently provided with respect to each of the cells.

Referring back to FIG. 4, in step S20, the FDM system to be used in the downlink communication with the user equipment to be scheduled is determined. More specifically, it is determined whether the localized FDM system or the distributed FDM system is to be used in the downlink communication to the user equipment.

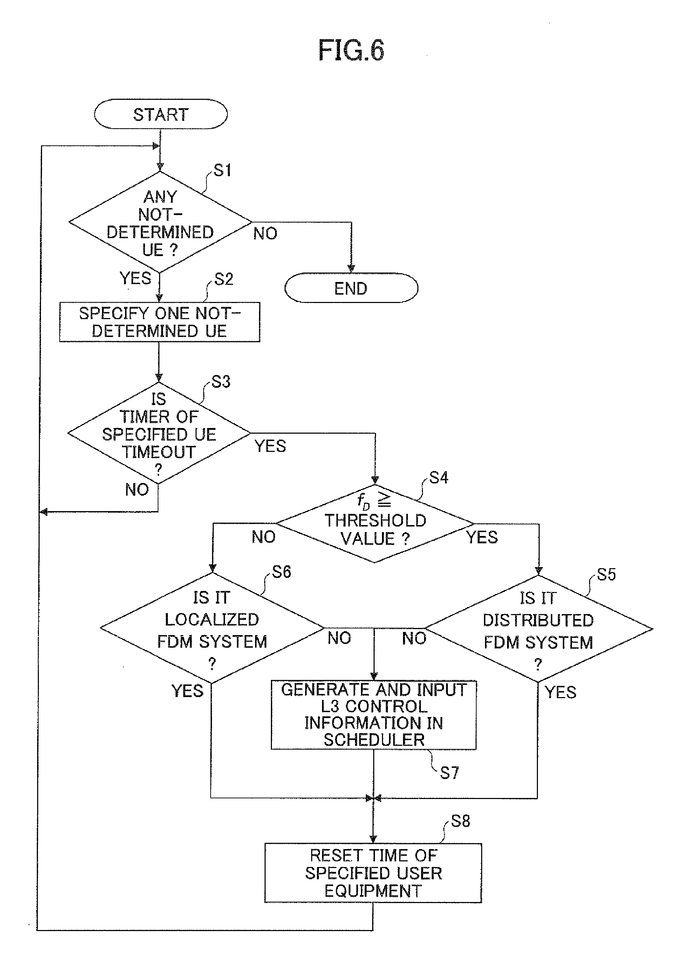

FIG. 6 is a flowchart showing an exemplary method of determining the FDM system to be used. This method may be used in step S20 of FIG. 4. As shown in FIG. 6, the process starts from step S1. In step S1, it is determined whether there is a presence of the user equipment in which it is not yet determined which of the FDM systems is to be used. When it is determined that there is no presence of user equipment for which it is not yet determined which of the FDM systems is to be used (i.e., in all of the user equipment, it is determined which of the FDM systems is to be used), the process ends. On the other hand when it is determined that there is a presence of user equipment for which it is not yet determined which of the FDM systems is to be used (hereinafter may be referred to as "not-determined user equipment), the process goes to step S2.

In step S2, one of the not-determined user equipment sets is specified.

In step S3, it is determined whether a timer of the specified user equipment is stopped. In this case, the time set in the timer is equal to the update cycle of the FDM system. For example, when the Transmission Time Interval (TTI) is 0.5 ms, the update cycle may be 1,000 ms (1 second). In other words, the update of the FDM system is performed at relatively long cycle. On the other hand, if it is determined that the timer is not stopped (still running), the process goes back to step S1 to repeat the same procedure described above. When the timer is stopped, the process goes to step S4.

In step S4, it is determined whether the maximum Doppler frequency f_{D} with respect to the user equipment specified in step S2 is equal to or greater than a threshold value. When it is determined "YES" in step S4, the process goes to step S5.

In step S5, it is determined whether the distributed FDM system is used as the transmission system with respect to the user equipment. When it is determined "YES", the process goes to step S8.

As described above, when it is determined "YES" in both steps S4 and S5, it is determined that the distributed FDM system is currently used as the transmission system of the user equipment and the current mobility of the user equipment is high. Therefore, the distributed FDM system should be continuously used (without being changed). Therefore, the currently using transmission system is continued without being changed and the timer of the user equipment is reset, so that the process goes back to step S1.

In step S5, when it is determined that the transmission system of the user equipment is not the distributed FDM system (i.e., when determined "NO" in step S5), the process goes to step S7.

As described above, when it is determined "YES" in step S4 and "NO" in step S5, it is determined that the current mobility of the user equipment is high but the localized FDM system is currently used as the transmission system of the user equipment. Therefore, the transmission system of the user equipment should be changed to the distributed FDM system. Therefore, in this case, the L3 control information is generated requesting to change the FDM system used with respect to the user equipment from the localized FDM system to the distributed FDM system. The generated L3 control information is transmitted via the data channel (DCH) to the user equipment. Then, the process goes to step S8, in which the timer of the user equipment is reset. Then, the process goes back to step S1.

On the other hand, in step S4, when it is determined that the maximum Doppler frequency f_{D} with respect to the user equipment specified in step S2 is less than the threshold value (i.e., when determined "NO" in step S4), the process goes to step S6.

In step S6, it is determined whether the localized FDM system is used as the transmission system with respect to the user equipment. When it is determined "YES", the process goes to step S8.

As described above, when it is determined "NO" in step S4 and "YES" in step S6, it is determined that the localized FDM system is currently selected as the transmission system of the user equipment and the current mobility of the user equipment is low. Therefore, the localized FDM system should be continuously used (without being changed). Therefore, the currently using transmission system is continued without being changed and the timer of the user equipment is reset, so that the process goes back to step S1.

In step S6, when it is determined that the transmission system of the user equipment is not the localized FDM system (i.e., when determined "NO" in step S6), the process goes to step S7.

As described above, when it is determined "NO" in steps S4 and S6, it is determined that the current mobility of the user equipment is low but the distributed FDM system is currently used as the transmission system of the user equipment. Therefore, the transmission system of the user equipment should be changed to the localized FDM system. Therefore, in this case, the L3 control information is generated requesting to change the FDM system selected with respect to the user equipment from the distributed FDM system to the localized FDM system. The generated L3 control information is transmitted via the data channel (DCH) to the user equipment. Then, the process goes to step S8, in which the timer of the user equipment is reset. Then, the process goes back to step S1.

As described above, the base station determines the appropriate FDM system to be used with respect to each user equipment at predetermined Transmission Time Intervals (TTI). When it is determined that the FDM system should be changed, the base station notifies the user equipment that the FDM system should be changed by using the L3 control information. When it is determined that it is not necessary to change the FDM system (i.e., "YES" in step S5 or S6), it is not necessary to generate the L3 control information.

In the example of FIG. 6, only the maximum Doppler frequency f_{D} is used to be compared in step S4 for simplification purposes. In step S4, however, it may be determined whether the process goes to step S5 or step S6 depending on traffic type of the user data or based on predetermined corresponding relationships between the comparison result of the maximum Doppler frequency f_{D} and the traffic type of the user data.

Referring back to FIG. 4, in step S30, the scheduling is performed to notify target user equipment of the FDM system determined in step S20 and the L3 control information generated in step S20. Generally, the scheduling of downlink data transmission is performed. In the scheduling process, resource blocks are specified (allocated) in accordance with the FDM system of the target user equipment. In a case where the user equipment to which the resource blocks are allocated receives downlink signals using the localized FDM system, the resource blocks are specified (allocated) in a manner so that the Localized Resource Block (LRB) numbers corresponds to the physical resource block numbers as shown in FIG. 5A. On the other hand, in a case where the user equipment to which the resource blocks are allocated receives downlink signals using the distributed FDM system, the resource blocks are specified (allocated) in a manner so that the Distributed Resource Block (LRB) numbers are independently determined with respect to each cell as shown in FIG. 5B. In FIG. 5B, each of the upper arrows indicates the resource blocks having the LRB number of "4". However, each of the meanings of the resource blocks having the LRB number of "4" may differ from the others due to the difference of FDM systems and the difference of numbering method with respect to each cell.

In any case, the resource blocks are specified (allocated) by using some numbers and the specified information content is included in the downlink L1/L2 control channel. As a method of specifying the resource blocks, there may be conceivably three methods as described below. However, these methods described below are for illustrative purposes only, and any other method may be used for specifying the resource blocks. In the following descriptions of each method, the resource block numbers may be regarded as the LRB numbers and the DRB numbers.

### (1) Bitmap method

In this bitmap method, the same number of bits as that of kinds of resource blocks are prepared, and the value of bits are changed depending on whether the corresponding resource blocks are used. For example, the value "1" of the bit corresponds to the state where the resource block is allocated, and the value "0" of the bit corresponds to the state where the resource block is not allocated. In this case, for example, the value of "01110010" represents the state where the first, the second, the third, and the sixth resource blocks are allocated and other resource blocks among the 0th through 7th resource blocks area not allocated. This method may be advantageous in that any specific allocation of the resource blocks may be expressed, but a large number of bits are required in proportion to the number of the resource blocks numbers, thereby greatly increasing the information amount to be controlled.

### (2) Tree method

In this tree method, when plural resource blocks are allocated to a user, it is controlled so that consecutive resource blocks are allocated to the user and so that different identification information (branch number) is provided with respect to each of the combinations of the allocated resource blocks.

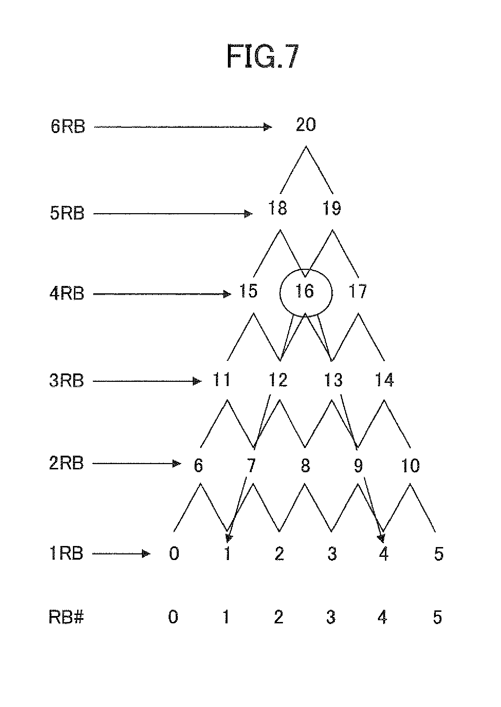

In the following, a case of the tree method is described with reference to FIG. 7 where six resource blocks specified by the resource block numbers (RB#) 0, 1, 2, 3, 4, and 5, respectively, are provided as shown in the bottom line of FIG. 7. In this case, as shown in FIG. 7, there is conceived a tree structure having six layers provided on the bottom line indicating the RB# 0 through 5, and one-digit number or two-digit number representing the identification information (branch number) is allocated to each of the top and branch points of the tree structure. When one resource block is required to be allocated, any branch number of 0, 1, 2, 3, 4, and 5 is used to specify the resource block numbers 0, 1, 2, 3, 4, and 5, respectively. On the other hand, when two (consecutive) resource blocks are required to be allocated, any branch number of 6, 7, 8, 9, 10 is used to specify the resource block numbers 0 and 1, 1 and 2, 2 and 3, 3 and 4, and 4 and 5, respectively. In the same manner, when more than two (consecutive) resource blocks are required to be allocated, one number (having one or two digits) is used to specify the corresponding combination of one consecutive resource block numbers.

As shown in FIG. 7, for example, when only RB#0 is to be allocated, the information indicating the corresponding branch number is expressed (determined) as "0". When only RB#0 and RB#1 are to be allocated, the information indicating the corresponding branch number is expressed as "6" in decimal (base 10) which is "00110" in binary (base 2). When the only consecutive RB#2 through RB#4 are to be allocated, the information indicating the corresponding branch number is expressed as "13" in decimal (base 10) which is "01101" in binary (base 2). When the only consecutive RB#1 through DRB#4 are to be allocated, the information indicating the corresponding branch number is expressed as "16" in decimal (base 10) which is "10000" in binary (base 2). As described above, when the bitmap method is used, six (6) bits are always required because the number of the resource block numbers is 6. However, when this tree method is used, any combination of consecutive resource blocks in 6 resource blocks may be expressed using up to two digits, thereby enabling reducing the number of control bits as described above. Generally, when this tree method is used, the number of control bits required to express the allocated resource blocks is given as log₂[N×(N+1)/2], where the symbol "N" denotes the number of allocated resource block(s).

### (3) First number designation method

This first number designation method is similar to the above (2) tree method in that, when plural resource blocks are allocated, it is controlled (limited) so that the plural resource blocks to be allocated should be consecutive resource blocks. However, unlike the (2) tree method, in this method, the consecutive resource blocks are uniquely specified by designating the first resource block number of the first resource block of the consecutive resource blocks to be allocated and the number of resource blocks which follow the first resource block of the consecutive resource blocks. For example, when the consecutive resource blocks 1, 2, 3, and 4 are to be allocated, the number "1" indicating the first resource block number of the first resource block of the consecutive resource blocks and the number "3" indicating the number of resource blocks (2, 3, and 4) that follow the first resource block (1) are designated (used). In this method, the number of control bits required to designate the first block number is given as log₂(N), and the number of control bits required to designate the number of the following resource blocks is given as log₂(N), where the symbol "N" denotes the number of total resource block(s). Therefore, by using this first number designation method, the number of control bits may also be reduced.

Any of the above methods (1) through (3) may be used for the localized FDM system. On the other hand, it is preferable the method (2) or the method (3) is used in the distributed FDM system. When the distributed FDM system is used, any resource block number may indicate plural frequency blocks having different frequency components across a wide frequency bandwidth. Because of this feature, the quality of the transmission may not differ much whether the allocated resource block numbers are consecutive. More specifically, for example, when a case where the resource block numbers 1, 2, 3, and 6 (not consecutive) are used to specify (allocate) the resource blocks is compared with a case where the (consecutive) block numbers 1, 2, 3, and 4 are used, it is expected that the quality of the transmission may not differ much between the two cases. In fact, however, when plural resource block numbers are to be allocated, there may be many cases that the number of control bits should be reduced by controlling (limiting) so that the plural resource block numbers become consecutive.

Referring back to FIG. 4, in step S40, the L1/L2 control channel including the information item specifying the resource block numbers by using any of the above methods (1) through (3) along with the data channel (DCH) is transmitted to the user equipment. As an example, regarding the downlink channels, the scheduling for allocating the data channel (DCH) is performed at a predetermined Transmission Time Intervals (TTI) such as 0.5 ms and the data channel (DCH) along with the L1/L2 control channel is transmitted to the user equipment. On the other hand, the update of the FDM system is performed via the control information of an upper layer at a long cycle length such as 1,000 ms. This is because the mobility of the user equipment is unlikely to be changed rapidly. Therefore, it is obvious for a person skilled in the art that the process shown in FIG. 4 is provided for explanation purposes only and doe not exactly describe an actual procedure.

### Embodiment 2

As described above, the resource block numbers for the distributed FDM system are independently (differently) determined with respect to each cell and the determined information content is transmitted via the broadcast channel (BCH). In this case, however, when the same resource block number happes to be allocated to the same frequency in cells adjacent to each other, user equipment near the cell edge may suffer a relatively large amount of interference. No matter what FDM system (localized FDM system or the distributed FDM system) is used, when the same block numbers are allocated to the same frequencies in the cells adjacent to each other, there is the same possibility that user equipment near the cell edge receives other-cell interference. However, when the localized FDM system is used, the resource blocks having good channel status (quality) are generally allocated to each user. Therefore, the influence of the other-cell interference may become more serious for the user equipment using the distributed FDM system. This is because in the distributed FDM system, the resource blocks are not allocated based on the channel status (quality). By tanking the above fact into consideration, in a second embodiment of the present invention, the resource block numbers and the resource blocks are to be divided in a manner so that the influence of the other-cell interference can be reduced.

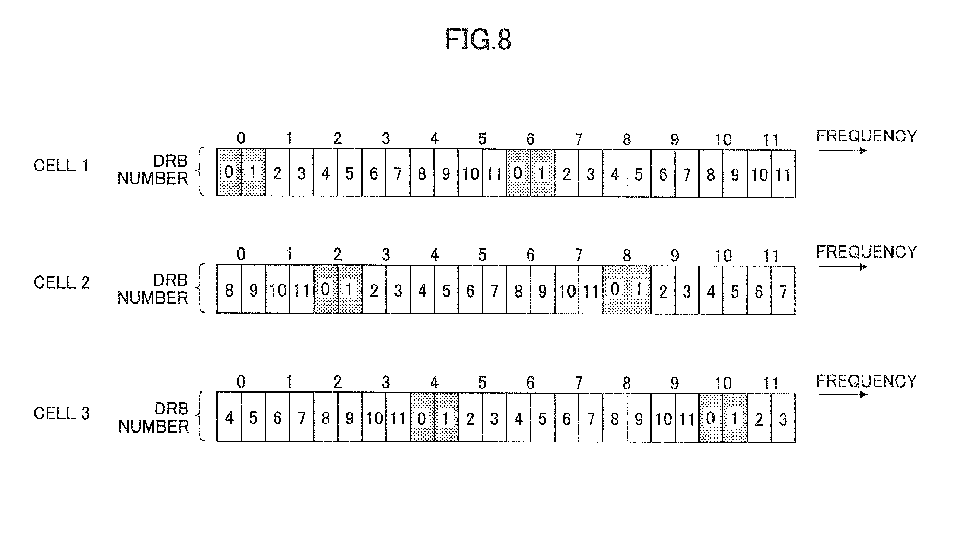

FIG. 8 shows a case where the corresponding relationships between the physical resource block numbers (PRB numbers) and the resource block numbers (RB numbers) are different from each other among the cells 1 through 3 so as to reduce the interference between the cells 1 though 3. More specifically, in the case of FIG. 8, the physical resource block number "0" corresponds to the DRB numbers 0 and 1 in the cell 1, the DRB numbers 8 and 9 in the cell 2, and the DRB numbers 4 and 5 in the cell 3. By differentiating in this way, it may become possible to effectively reduce the cell interference even when it is determined to sequentially use the resource block numbers in the increasing order across the whole system.

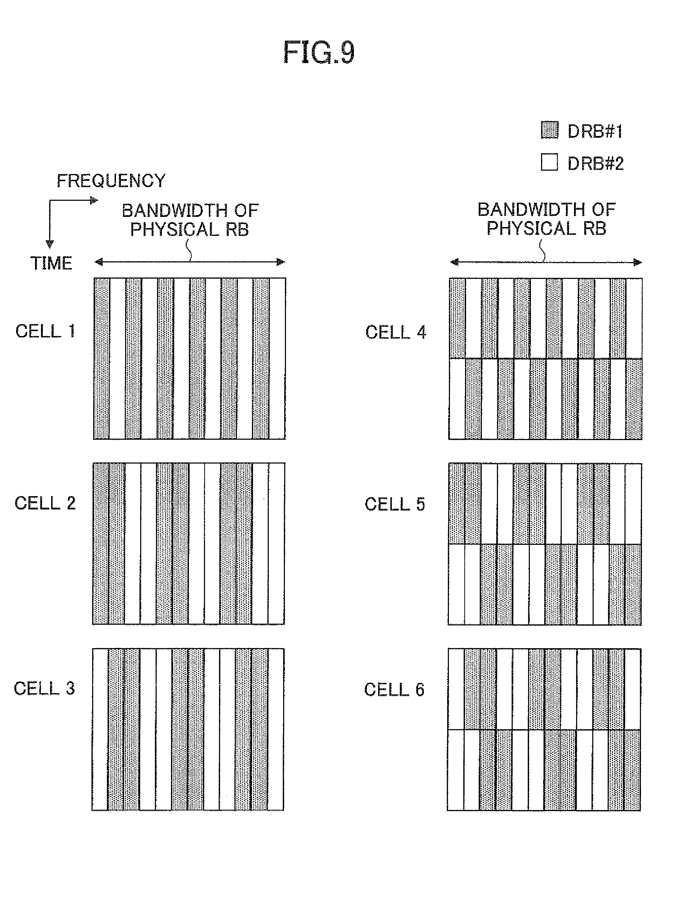

FIG. 9 shows a case where different allocation patterns (methods) are used for the cells 1 through 3 in order to reduce interference between cells. The multiplexing number "N" with respect to the cells 1, 2 and 3 is 2. Obviously, there may be other various patterns (methods) of realizing the multiplexing number N=2 by allocating (dividing) the physical resource blocks (PRBs) in the frequency domain in addition to the patterns (methods) illustrated in FIG. 9. For example, when one PRB has twelve (12) sub-carriers, the formula N=2 can be satisfied by dividing the twelve (12) sub-carriers into a part having sub-carriers 1 through 11 and a part having the rest of sub-carrier. Further, as illustrated in cells 4 through 6 of FIG. 7, by dividing one physical resource block (PRB) not only in the frequency domain but also in time domain, the interference between cells may be reduced. The methods illustrated in FIGS. 8 and 9 may be separately or jointly used. The number of divisions in frequency domain and in time domain and the multiplexing number described above are only exemplary numbers, and any other appropriate values may be used.

### Embodiment 3

In existing mobile communication systems such the High Speed Downlink Packet Access (HSDPA), in order to improve the data throughput (particularly the downlink data throughput), the Adaptive Modulation and Channel coding (AMC) process is performed. When the AMC is performed, the data modulation system (method) and the channel coding system (method) are adaptively changed (at a TTI such as about 0.5 ms as an extreme case) depending on the quality of the channel status and the like. Therefore, the AMC may greatly contribute to increasing the data rate and the capacity of data transmission. Particularly, in data transmission when the packet length is long, the AMC may greatly improve the throughput.

In the AMC process, it is necessary to notify the user equipment of the transmission format (modulation system and channel coding rate) applied to the data channel via the L1/L2 control channel whenever the data channel is transmitted. Basically, the L1/L2 control channel includes essential information in order to demodulate the data channel, and the L1/L2 control channel is required to be transmitted whenever each of the downlink data channels is transmitted.

Therefore, when the data packets having a short packet length are transmitted at short intervals, the L1/L2 control channel is required to be transmitted along with each data transmission of the data packets, thereby increasing the portion of the radio resources to be allocated to the control channel and accordingly reducing the portion of the radio resources to be allocated to the data channel. Typical examples of such data packets having a short packet length and being required to be transmitted at short intervals are voice packets, VoIP (Voice over Internet Protocol), real-time data packets and the like.

To overcome the problem, a method called Persistent Scheduling is proposed. According to this method, by using a fixed (for example, one) transmission format, the downlink data channel (typically voice packets) is transmitted at a predetermined cycle such as 20 ms. In this case, for example, QPSK is fixed as the modulation system (method) and the channel coding rate is also fixed at 1/3, and this information is shared between the base station and the user equipment. Therefore, even if the L1/L2 control channel is not transmitted whenever the data channel is transmitted, the user equipment may appropriately receive the downlink data channel such as VoIP.

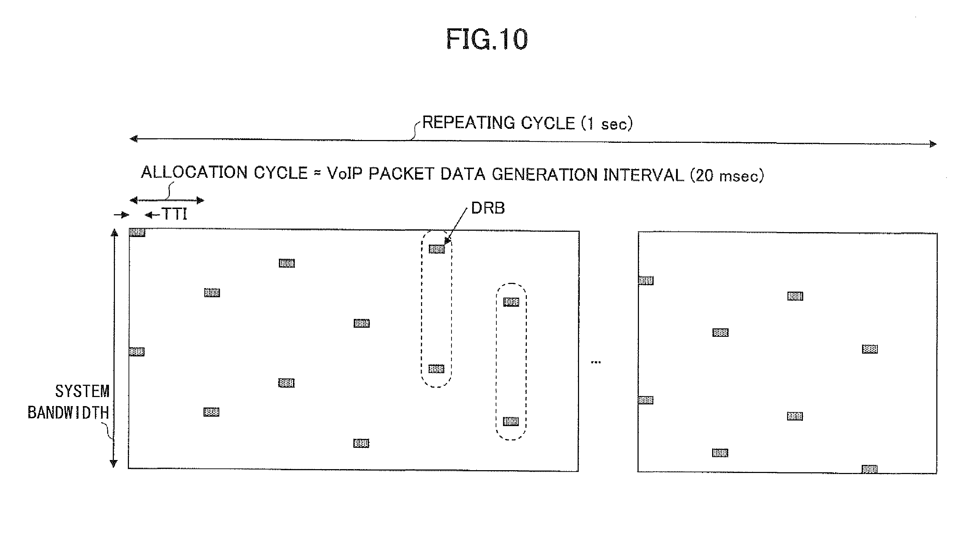

As shown in FIG. 10, according to the third embodiment of the present invention, data packets to be transmitted at an allocation cycle such as 20 ms are transmitted by the distributed FDM system, and the resource blocks to be used for the data packet transmission are provided in accordance with a predetermined hopping pattern in the frequency domain having a repeating cycle (such as 1,000 ms cycle) longer than the allocation cycle (data packets generation cycle). As shown in dotted line frames of FIG. 10, by mapping one VoIP data to plural resource blocks within the same TTI, the transmission based on the distributed FDM system is realized. The hopping pattern and the transmission format may be changed by the L3 control information of an upper layer but are to be maintained and fixed at least within the above repeating cycle. The hopping pattern may be changed every repeating cycle or maintained unchanged. In any case, by variously changing the resource block numbers to be used in the Persistent Scheduling within the repeating cycle and using Frequency Diversity Effect, it may become possible to further guarantee the transmission quality compared with a case where conventional Persistent Scheduling is performed.

The present invention is described by referring to a specific embodiment. However, a person skilled in the art may understand that the above embodiment is described for illustrative purpose only and may think of examples of various modifications, transformations, alterations, changes, and the like. For illustrative purposes, the apparatus according to an embodiment of the present invention is described with reference to the functional block diagrams. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority from Japanese Patent Application No. 2006-272348 filed on October 3, 2006, the entire contents of which are hereby incorporated herein by reference.

## Claims

1. A base station apparatus comprising:
a low-layer control channel generation unit configured to generate a low-layer control channel including at least resource allocation information and transmission system information of a data channel to be transmitted to a user equipment;
a channel coding unit configured to separately perform channel coding on each low-layer control channel of a plurality of the user equipment;
a transmission unit configured to transmit the data channel and the low-layer control channel to the user equipment; and
a determination unit configured to determine a multiplexing system of a downlink radio resource based on at least one of a mobility of the user equipment and a traffic type, wherein
high-layer control information indicating that the multiplexing system of the downlink radio resource is either a localized FDM system or a distributed FDM system is transmitted via the data channel.

2. The base station apparatus according to claim 1, wherein
in the localized FDM system, an entire bandwidth of at least one physical resource block is allocated to a certain user equipment, and
in the distributed FDM system, a signal to be transmitted to the certain user equipment has plural discrete frequency components and a bandwidth of each of the plural frequency components is narrower than a bandwidth of one physical resource block.

3. The base station apparatus according to claim 1, wherein
corresponding relationships between plural physical resource blocks constituting a system bandwidth and a combination of plural discrete frequency components are determined with respect to a cell.

4. The base station apparatus according to claim 3, wherein
the corresponding relationships are reported via a broadcast channel.

5. The base station apparatus according to claim 3, wherein
the corresponding relationships are determined so as to be different from each other at least in adjacent cells.

6. The base station apparatus according to claim 5, wherein
frequency components and time components of the combination of the plural discrete frequency components are determined so as to draw a predetermined hopping pattern within a certain cycle.

7. The base station apparatus according to claim 5, wherein
a combination of the plural frequency components of a signal to be transmitted to a certain user equipment and a combination of the plural frequency components of a signal to be transmitted to another user equipment are time-division multiplexed and transmitted.

8. The base station apparatus according to claim 3, wherein
when the combination of the plural discrete frequency components is specified by numbers and two or more combinations of the plural frequency components are allocated to a same user equipment, a combination of consecutive numbers is allocated.

9. The base station apparatus according to claim 8, wherein
a predetermined identification information designating each of the combinations of the consecutive numbers is included in the resource allocation information.

10. The base station apparatus according to claim 8, wherein
a first number of the consecutive numbers and a number of the numbers that follow the first number are included in the resource allocation information.

11. The base station apparatus according to claim 1, wherein
in the localized FDM system, bitmap information indicating whether each of plural physical resource blocks is allocated to a specific user equipment is included in the resource allocation information.

12. The base station apparatus according to claim 11, wherein
when each of the physical resource blocks constituting a system bandwidth is specified by a number and plural of the physical resource blocks are allocated to a same user equipment, consecutive numbers of the physical resource blocks are allocated.

13. The base station apparatus according to claim 12, wherein
a predetermined identification information designating each of the combinations of the consecutive numbers is included in the resource allocation information.

14. The base station apparatus according to claim 12, wherein
a first number of the consecutive numbers and a number of the numbers that follow the first number are included in the resource allocation information.

15. A method used in a base station apparatus in a mobile communication system, the method comprising:
generating a low-layer control channel including at least resource allocation information and transmission system information of a data channel to be transmitted to a user equipment;
separately performing channel coding on each low-layer control channel of a plurality of the user equipment; and
transmitting the data channel and the low-layer control channel to the user equipment, wherein
a multiplexing system of a downlink radio resource is determined based on at least one of a mobility of the user equipment and a traffic type, and
high-layer control information indicating that the multiplexing system of the downlink radio resource is either a localized FDM system or a distributed FDM system is transmitted via the data channel.
